# EUROPÄISCHE PATENTSCHRIFT

(11) **EP 0 609 275 B1**
(45) Veröffentlichungstag und Bekanntmachung des Hinweises auf die Patenterteilung: **13.12.1995**
(21) Anmeldenummer: 92921137.3
(22) Anmeldetag: 14.10.1992
(51) Int. Cl.: B01D 71/02, C04B 38/00

(54) **KERAMISCHES FILTERELEMENT ZUR TANGENTIALFLUSS-FILTRATION VON FLÜSSIGKEITEN UND GASEN**
CERAMIC FILTERING ELEMENT FOR TANGENTIAL FLOW FILTRATION OF LIQUIDS AND GASSES
ELEMENT CERAMIQUE DE FILTRAGE A COURANT TANGENTIEL DE LIQUIDES ET DE GAZ

(30) Priorität: 16.10.1991 DE 4134223
(43) Veröffentlichungstag der Anmeldung: 10.08.1994
(73) Patentinhaber: Schumacher Umwelt- und Trenntechnik GmbH, D-74564 Crailsheim (DE)
(72) Erfinder: OLAPINSKI, Hans, D-7307 Aichwald 5 (DE); MICHELL, Winfried, D-7313 Reichenbach (DE); KIELWEIN, Manfred, D-7321 Börtlingen (DE); SIMMICH, Hans-Erich, D-7314 Wernau (DE); ZIEGELBAUER, Helmut, D-7310 Plochingen (DE)
(74) Vertreter: Helber, Friedrich G., Dipl.-Ing.
(86) Internationale Anmeldenummer: EP9202372
(87) Internationale Veröffentlichungsnummer: WO9307959

(56) Entgegenhaltungen:
- GB-A- 1 557 899
- US-A- 4 233 351
- JOURNAL OF MEMBRANE SCIENCE Bd. 39, Nr. 3, Dezember 1988, AMSTERDAM Seiten 221 - 241 H. P. HSIEH ET AL. 'MICROPOUROUS ALUMINA MEMBRANES'

## Beschreibung

Die Erfindung betrifft ein keramisches Filterelement zur Tangentialfluß-Filtration von Flüssigkeiten und Gasen, entsprechend dem Gattungsbegriff von Patentanspruch 1.

Keramische Membranfilter haben sich insbesondere bei der Wasserwirtschaft und in der Getränkeindustrie für die Filtration von Bier, Wein und Fruchtsäften bewährt, wobei die Tangentialfluß-Filtration (cross-flow) bei kontinuierlichen Prozeßabläufen den Vorrang hat. Durch diese, auch als dynamische Filtration bezeichnete Anwendung, können Suspensionen filtriert werden, ohne daß die Membran verblockt wird. Hierbei wird die zu filtrierende Flüssigkeit nicht direkt durch die Membran gepreßt sondern mit einer entsprechend hohen Fließgeschwindigkeit im Bereich von 2 - 7 m/sec. an die Oberfläche der Membran vorbeigeführt, wobei nur ein Teil des Flüssigkeitsstromes die Membran als Filtrat (Permeat) passiert. Das Verblocken der Membran, d.h. die Bildung eines Filterkuchens auf der Membran wird nun dadurch verhindert, daß die Suspension an der Membranoberfläche infolge ihrer hohen Fließgeschwindigkeit und der dort auftretenden Mikroturbulenzen die an der Membranoberfläche zurückgehaltenen Partikel ständig freispült.

Keramische Filterelemente zur Tangentialfluß-Filtration, wie sie beispielsweise aus der DE-A-35 19 620 bekannt sind, besitzen kombinierte Schichten unterschiedlicher Porösität und definierter Porengröße. Die obere, dünne Membranschicht übernimmt dabei trennende Funktion, die darunterliegende massive, grobkeramische Schicht dient als Trägerschicht. Als besonders wirkungsvoll werden dort Filterelemente genannt, die im allgemeinen eine langgestreckte, zylindrische Form der Trägerschichtstruktur - nachfolgend als "Stützkörper" bezeichnet - aufweisen, mit einer Vielzahl sich durch den Stützkörper erstreckenden Bohrungen und mit einer auf deren Oberfläche aufgebrachten sehr dünnen keramischen Membran als Trennelement.

Ein wesentlicher Nachteil dieser bekannten keramischen Filterelemente besteht darin, daß die Abdichtung der Elemente immer dann zum Problem wird, wenn an den Enden der Elemente sowohl Unfiltrat eingeführt, als auch Filtrat abgeführt werden soll. In der Getränkeindustrie haben sich Filterelemente mit einer Vielzahl koaxialer zylindrischer Kanäle bewährt, durch die ausschließlich Unfiltrat fließt. Das durch die Membranoberfläche der Kanäle dringende Filtrat fließt unter Druck durch den Stützkörper und tritt an seiner Mantelfläche aus. Der Nachteil dieser bekannten Multikanal-Filterelemente liegt in der geringen Durchflußrate des Filtrats. Insbesondere die inneren Kanäle tragen wenig zur Filterleistung bei, obwohl sie einen verhältnismäßig großen Teil der Membranoberfläche aufweisen. Versuche haben gezeigt, daß der Stützkörper selbst einen nicht vernachlässigbaren Widerstand aufweist. Als Beispiel ist eine derartige Untersuchung weiter hinten in der Beschreibung angegeben.

Ausgehend von diesem Stand der Technik besteht die Aufgabe der vorliegenden Erfindung darin, ein zur Tangentialfluß-Filtration von Flüssigkeiten und Gasen verbessertes keramisches Filterelement zur Verfügung zu stellen, das einen Stützkörper mit verringertem Durchflußwiderstand aufweist, mit dem bei gleichem Druckunterschied zwischen Unfiltratkreislauf und Filtratablauf eine höhere Durchflußrate des Filtrats erzielt wird.

Diese Aufgabe wird erfindungsgemäß dadurch gelöst, daß um die gedachte Mittelachse des Stützkörpers Kanäle koaxial angeordnet sind, wobei im Querschnitt gesehen die Kontur der nach außen gerichteten Kanalwand der Außenkontur des Stützkörpers angepaßt ist, so daß der Stutzkörper dort eine gleichbleibend dicke, der mechanischen Belastung entsprechende Wandstärke aufweist und die Kontur der anderen Kanalwände derart gestaltet ist, daß die zwischen den Kanälen verbleibenden Stege sich nach außen hin keilförmig erweitern, wobei die Stegbreite bis auf max. das 3-fache der dünnsten Wandstärke zunimmt.

Die erfindungsgemäße Lösung beruht auf der Erkenntnis, daß der Filtratfluß, d. h. das durch die Membranoberfläche bei gleichem Druckpotential an allen Stellen der Kanäle gleichmäßig durchdringende Filtrat, auf seinem Weg durch den Stützkörper nach außen hin stetig zunimmt. Der Durchflußwiderstand wird auch bei längeren Wegen durch den Stützkörper gering gehalten, denn die zwischen den Kanälen verbleibenden Stege nehmen entsprechend dem Filtratfluß an Breite zu. Auch weisen die peripheren Kanäle eine Anpassung ihrer nach außen gerichteten Kanalwand an die Außenkontur des Stützkörpers auf, womit der kürzeste Weg des Filtrats durch den Stützkörper gegeben ist. Die so gestalteten keramischen Filterelemente gestatten aufgrund ihrer günstigen Kanalgeometrie, mit den gegenüber dem Stand der Technik verbesserten Fließbedingungen, eine bis zu 30 % gesteigerte Durchflußrate des Filtrats, gegenüber solchen Filterelementen, die eine Vielzahl Kanäle in Form zylindrischer Bohrungen aufweisen.

Besonders geeignet ist die vorliegende Erfindung bei der Mikrofiltration, wobei der langgestreckte Stützkörper mit polygonalem Querschnitt oder in Form eines Zylinders vorliegt und insbesondere auf einem Teilkreis mind. 3 segmentförmige, der Außenkontur angepaßte, Kanäle aufweist. Dadurch ergeben sich verhältnismäßig große Kanalquerschnitte für einen hohen Unfiltratdurchsatz und einer hohen Filtrationsrate bei entsprechend großporiger Membrankeramik.

Eine besonders vorteilhafte Ausgestaltungsform der Erfindung sieht vor, daß die zwischen den Kanälen verbleibenden Stege des Stützkörpers sich nach außen hin in Stufensprüngen keilförmig erweitern, derart, daß zum ersten Keilwinkel α 1 ein zweiter Keilwinkel α 2 addiert wird und so fort. Die Kontur der Kanalwände, die den zwischen zwei benachbarte Kanäle verbleibenden Steg begrenzt, kann bei genügend vielen Stufensprüngen einen Kurvenverlauf mit kontinuierlich zunehmendem Steigungswinkel α aufweisen. Bei gleicher Strömungsgeschwindigkeit und größerem Kanalquerschnitt kann so mehr Unfiltrat durch das Filterelement geleitet werden. Das durch die relativ grobe Membran reichlich anfallende Filtrat gelangt über die geringe Wandstärke der außen liegenden Stützkörperwand, sowie der keilförmigen Stege vom Inneren des Stützkörpers her bei geringem Druckverlust an die Manteloberfläche des Filterelementes und kann dort mit entsprechender Vorrichtung aufgefangen werden.

Bei einer weiteren bevorzugten Ausführungsform der Erfindung verlaufen die Stege, von der Mitte des Stützkörpers aus gesehen, zunächst gerade mit gleichbleibender Breite, bevor sie sich nach außen hin keilförmig erweitern. Der gerade Stegabschnitt kann vorzugsweise der Hälfte der Steglänge entsprechen. Bei einer Mindestbreite der Stege, d. h. eine Mindestwandstärke der Stützkörperkeramik wird ein max. Kanalquerschnitt zur Mitte hin erreicht.

Eine bei der Ultrafiltration besonders vorteilhafte Ausführungsform der Erfindung sieht vor, daß das Filterelement einen langgestreckten, quadratischen oder mit hexagonalem Querschnitt geformten Stützkörper aufweist, der von einer Vielzahl Kanälen, ähnlich einer Wabenstruktur, durchzogen ist. Mit der wabenartigen Kanalstruktur wird eine extrem große Membranoberfläche verwirklicht und ermöglicht damit einen wirtschaftlichen Filtratdurchsatz. Denn eine für die Ultrafiltration geeignete Membran besitzt extrem kleine Poren mit Porendurchmesser im Bereich von 1 nm bis 100 nm. Auch hier muß das Filtrat wieder von innen nach außen durch den Stützkörper dringen, wobei erfindungsgemäß ein keilförmiger Fließpfad dadurch entsteht, daß die Kanalquerschnittflächen von innen nach außen abnehmen und die verbleibenden Stege sich nach außen hin in treppenartigen Stufensprüngen erweitern, womit der Durchflußwiderstand des Stützkörpers verringert wird.

Ausführungsbeispiele der Erfindung werden anhand der Zeichnungen beschrieben. Es zeigen:

Fig. 1 einen Querschnitt eines keramischen Filterelementes einer bevorzugten Ausführungsform gemäß der vorliegenden Erfindung.

Fig. 2, 3 und 4 Querschnitte anderer möglicher Ausführungsformen der Erfindung.

Fig. 5 ein Balkendiagramm, das die Durchflußraten eines handelsüblichen Multikanal-Filterelements mit 19 Kanälen und 12 Kanälen gegenüberstellt.

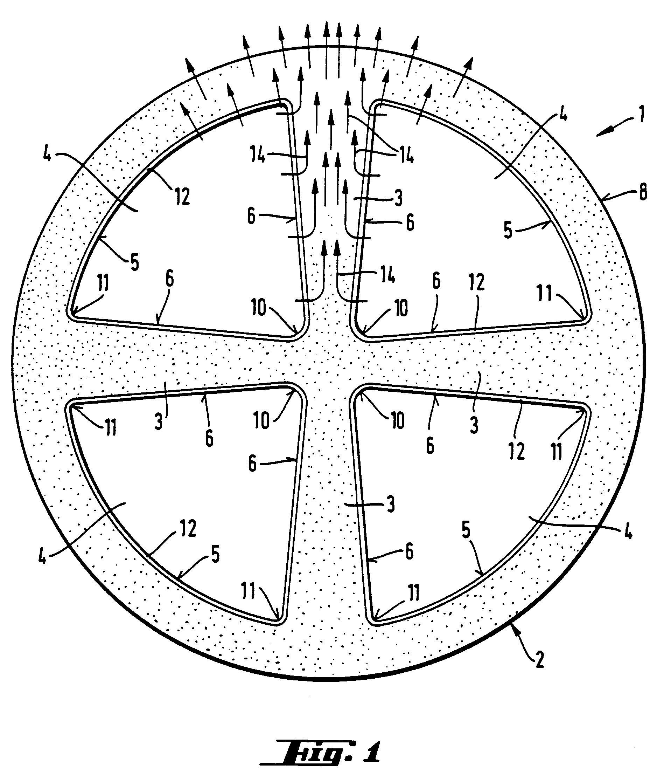

Das in Fig. 1 gezeigte, keramische Filterelement (1) kann insbesondere bei der Mikrofiltration in der Getränkeindustrie eingesetzt werden. Der aus keramischem Material extrudierte 850 mm lange, zylindrische Stützkörper (2) weist hier vier koaxial angeordnete Kanäle (4) auf. Der Stützkörper (2), bestehend aus einer massiven grobkeramischen Struktur aus α -Al₂O₃ mit einer mittleren Porengröße von 15 »m bei einer Porosität von 40 %, hat einen Durchmesser von 32 mm.

Die Oberflächen der Kanäle (4) weisen eine mittels Schlickertechnik aufgebrachte keramische Membran (12) aus α - Al₂O₃ mit einer mittleren Porengröße von 0,5 »m bei einer Porosität von 35% auf. Die Schichtdicke der Membran (12) beträgt je nach Anwendung zwischen 5 und 20 »m.

Das Filterelement (1) weist an seinen Enden nicht näher dargestellte Abdichtungen für den Zu- und Ablauf des Unfiltrats auf, derart, daß die offenen Poren der Stützkörperkeramik an den Enden durch Auffüllen mit einer Kunststoffmasse auf einer Länge von einigen Millimetern geschlossen werden. Mit Endkappen bestückt wird das Filterelement (1) in einen Filtrationskreislauf eingebaut, so daß das Unfiltrat nur die Kanäle (4) durchströmen kann und ein Teil dieser Trägerflüssigkeit die dünne Membranschicht (12) als Filtrat passiert. Das so aus dem Unfiltrat abgetrennte Filtrat durchströmt den porösen Stützkörper (2) und tritt an seiner Außenkontur (8) aus, wo es mit entsprechender Vorrichtung aufgefangen wird.

Die vier um die Mittelachse des Stützkörpers (2) symmetrisch angeordneten Kanäle (4) sind jeweils von drei Kanalwänden umgeben, wobei die im Querschnitt gesehene Kontur der nach außen gerichteten kreisbogenförmigen Kanalwand (5) der Außenkontur (8) des Stützkörpers (2) angepaßt ist, so daß hier eine gleichbleibende Wandstärke vorliegt, durch die das Filtrat hindurch auf kürzestem Weg nach außen dringen kann. Die Dicke der Wandstärke richtet sich nach der mechanischen Belastung des Stützkörpers (2).

Die beiden Kanalwände (6) verlaufen derart, daß der zwischen zwei Kanälen (4) verbleibende Steg (3) des Stützkörpers (2) sich nach außen hin keilförmig erweitert. Von der engsten Stelle, d.h. an der der Mittelachse benachbart liegenden Stelle, an der der Steg in geringster Breite ausgebildet ist, dort wo die Kontur der Kanalwände (6) in den Radius (10) zusammenläuft, bis zur breitesten Stelle am Übergangsradius (11) verdoppelt sich die Breite des Steges (3). Die Radien (10) bzw. Übergangsradien (11) sind aus fertigkeits-und strömungstechnischen Gründen zweckmäßig.

Die Pfeile (14) verdeutlichen wie die einzelnen gedachten Strömungsfäden des Filtrats sich von innen nach außen hin verdichten und einen größeren Raum zum Abfluß vorfinden. Durch diese erfindungsgemäße Maßnahme ist es gelungen den Stützkörperwiderstand bis zu 30% gegenüber solchen,mit sich nicht nach außen hin verbreiternden Stegen, zu verringern.

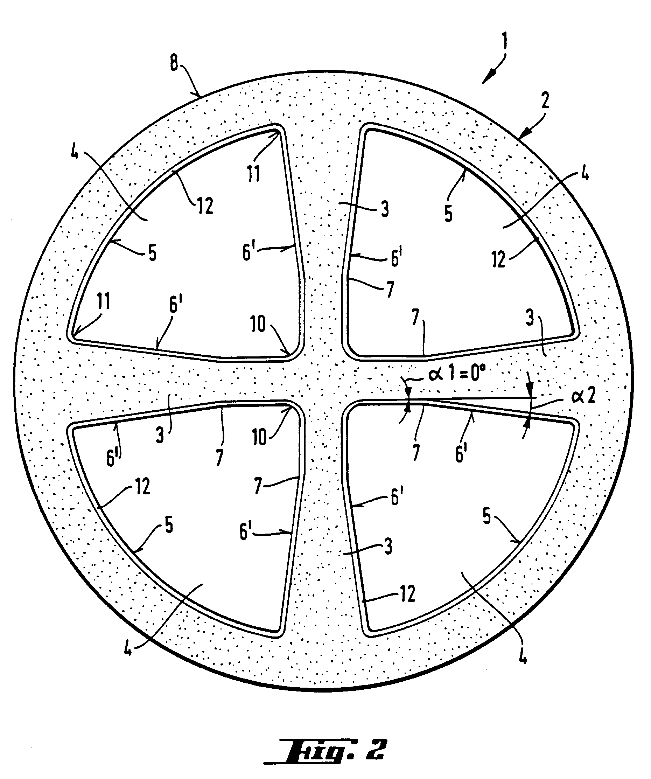

Fig. 2 zeigt eine weitere günstige Kanalgestaltung, die einen größeren Durchflußquerschnitt ermöglicht.

Die Kanäle (4) weichen in der Gestalt von denen aus Fig. 1 dadurch ab, daß die Stege (3) von der Mitte des kreisförmigen Filterelementes (1) aus gesehen, zunächst gerade mit gleichbleibender Stegbreite verlaufen, wobei der gerade Stegabschnitt einem Drittel der Steglänge entspricht. Es folgen zwei Drittel Stegabschnitt eingeleitet durch einen Stufensprung (7), so daß sich der Steg unter dem Keilwinkel α 2 nach außen hin erweitert. Definitionsgemäß entspricht ein Keilwinkel α 1 = 0 Grad einem geraden sich nicht erweiternden Stegabschnitt. Durch den gestuften Verlauf der Kontur der Kanalwände (6'), welcher nicht auf eine Stufe beschränkt ist, ergibt sich, gegenüber solchen Kanälen mit geradlinig verlaufenden Kanalwänden, wie in Fig. 1 gezeigt, ein größerer Querschnitt der Kanäle (4) zur Stützkörpermitte hin, unter Beibehaltung einer Mindestwandstärke der Stützkörperzwischenwände.

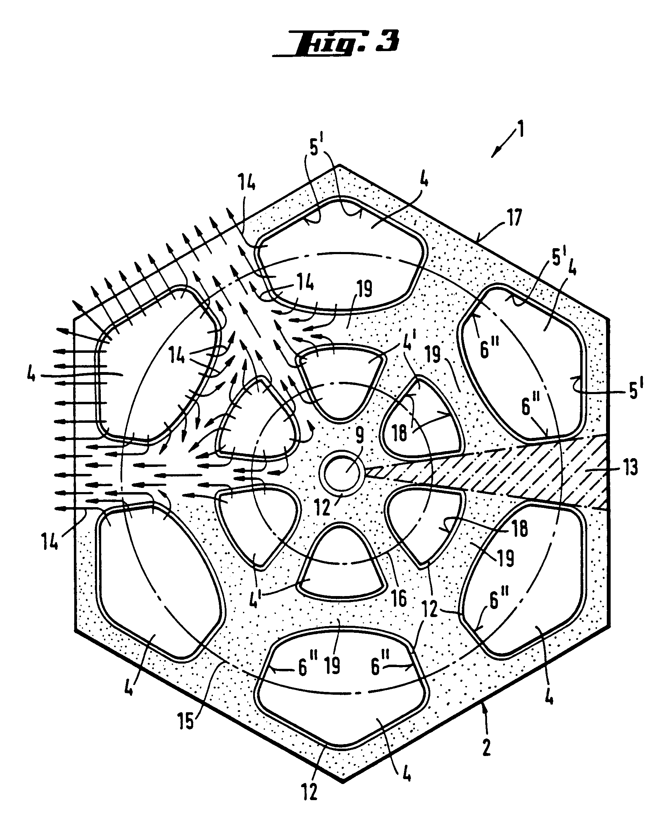

Eine Vergrößerung der Membranoberfläche wird erreicht, wenn wie in Fig. 3 die sich durch den Stützkörper (2) erstreckenden Kanäle (4; 4') auf zwei Teilkreise (15 und 16) angeordnet sind. Dieses Filterelement (1) mit hexagonalem Querschnitt besitzt auf seinem äußeren Teilkreis (15) sechs Kanäle (4) mit einer der Außenkontur (17) angepaßten Kontur der Kanalwand (5'). Die Kontur der Kanalwände (6'') folgt dem durch Schraffur angedeuteten keilförmigen Fließpfad (13). Die sechs auf dem inneren Teilkreis (16) angeordneten Kanäle (4') weisen eine Kontur (18) auf, die einmal dem keilförmigen Fließpfad (13) angepaßt ist und zum anderen mit der Kontur der auf dem Teilkreis (15) angeordneten Kanäle (4) einen sich zu den Seiten hin erweiternden Steg (19) ergibt.

Ein weiterer zylindrischer Kanal (9) erstreckt sich durch die Mittelachse des Stützkörpers (2). Der mittlere Kanal (9) hat in Bezug auf die Filtration keine besondere Bedeutung, vielmehr wird durch ihn eine beim Sinterprozeß schädliche Materialanhäufung im Zentrum des Stützkörpers (1) vermieden, wodurch eine Rißbildung und damit Ausschuß verhindert werden kann.

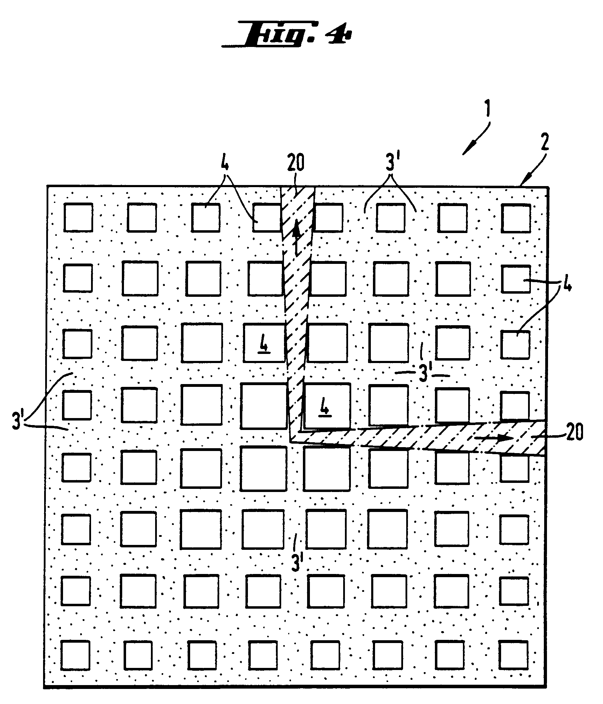

Eine bei der Ultrafiltration erforderliche Membranoberfläche muß bezogen auf das Stützkörpervolumen sehr groß sein, um damit eine wirtschaftliche Durchflußrate zu erreichen. Hierzu eignen sich Filterelemente mit wabenartiger Struktur, wie in Fig. 4 gezeigt. Das quadratische Filterelement (1) besitzt eine Vielzahl von ebenfalls quadratischen Kanälen (4), die sich wie bei allen anderen Ausführungsformen in Längsrichtung durch das Filterelement erstrecken. Die Querschnittfläche der Kanäle (4) nimmt von innen nach außen ab, so daß sich, in Fig. 4 übertrieben stark dargestellt, die Stege (3') des Stützkörpers (2) nach außen hin verbreitern. Auch hier ergibt sich ein aus vielen treppenartigen Stufensprüngen zusammengesetzter keilförmiger Fließpfad (20).

Das nachfolgende Beispiel zeigt Durchflußmessungen an einem handelsüblichen keramischen Multikanalfilterelement.

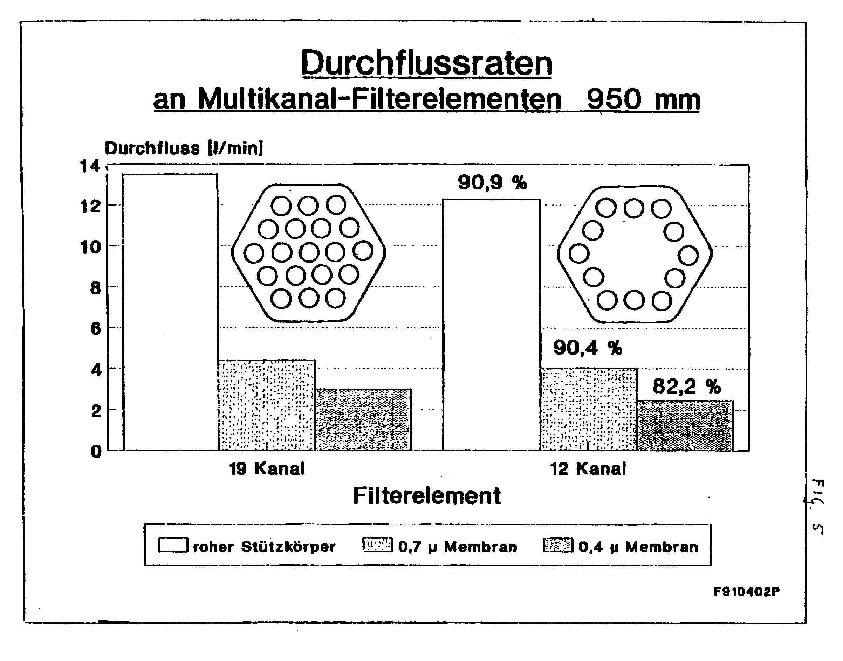

Im Balkendiagramm, Fig. 5, werden 3 Durchflußraten gegenübergestellt. Die beiden zur Durchflußmessung gegenübergestellten Filterelemente unterscheiden sich nur in der Anzahl der Kanäle, die alle zylindrisch geformt sind und den gleichen Durchmesser aufweisen. Mit dem linken Filterelement, das 19 Kanäle aufweist, werden bei einem bestimmten Systemdruck drei Durchflußraten erzielt, die jeweils 100 % entsprechen, wobei die Kanäle seines Stützkörpers entweder ohne Membran, mit einer 0,7 »m Porengröße oder einer 0,4 »m Porengröße aufweisenden Membran ausgerüstet ist. Für das rechte Filterelement mit 12 peripher angeordneten Kanälen zeigen die drei entsprechenden Balken, auf wieviel % jeweils die Durchflußrate zurückgeht.

Diese Untersuchung zeigt, daß der Stützkörper selbst einen nicht vernachlässigbaren Durchflußwiderstand auf das durch den Stützkörper fließende Filtrat ausübt. Die inneren Kanäle, die mehr als 1/3 der Gesamtkanal-bzw. Membranoberfläche ausmachen, tragen, bei einem Stützkörper ohne Membran bzw. mit Membran bis zu einer Feinheit von 0,7 »m, nur mit ca. 10 % zur Filterleistung bei.

## Patentansprüche

1. Keramisches Filterelement zur Tangentialfluß-Filtration von Flüssigkeiten und Gasen mit einem langgestreckten Stützkörper (2) aus porösem keramischem Material, welches insbesondere einen mittleren Porendurchmesser von 3 »m bis 20 »m aufweist, mit wenigstens zwei sich durch den Stützkörper erstreckenden koaxialen Kanälen (4,4'), auf deren Oberfläche eine ein- oder mehrschichtige keramische Membran (12) mit kalibrierter Porenstruktur aufgebracht ist, wobei das mittels Membran selektierte Filtrat eines durch die Kanäle strömenden Fluids durch den Stützkörper hindurch an seiner Mantelfläche austritt und dort mit entsprechender Vorrichtung auffangbar ist, dadurch gekennzeichnet, daß um die gedachte Mittelachse des Stützkörpers (2) Kanäle (4; 4') koaxial angeordnet sind, wobei im Querschnitt gesehen die Kontur der nach außen gerichteten Kanalwand (5; 5') der Außenkontur (8; 17) des Stützkörpers (2) angepaßt ist, so daß der Stützkörper (2) dort eine gleichbleibend dicke, der mechanischen Belastung entsprechende Wandstärke aufweist und die Kontur der anderen Kanalwände (6; 6'; 6'') derart gestaltet ist, daß die zwischen den Känalen (4; 4') verbleibenden Stege (3; 3') sich nach außen hin keilförmig erweitern, wobei die Stegbreite bis auf maximal das 3-fache der dünnsten Wandstärke zunimmt.

2. Keramisches Filterelement nach Anspruch 1, dadurch gekennzeichnet, daß der langgestreckte Stützkörper (2) mit polygonalem Querschnitt oder in Form eines Zylinders vorliegt und daß er auf einem oder auf mehreren Teilkreisen (15; 16) segmentförmige Kanäle (4; 4',) aufweist, wobei auf einem Teilkreis mindestens 3 Kanäle (4; 4') angeordnet sind.

3. Keramisches Filterelement nach einem der Ansprüche 1 und 2 dadurch gekennzeichnet, daß sich die Stege (3) des Stützkörpers (2) bei einer einzigen koaxial angeordneten Kanalreihe nach außen hin mit mindestens einem Stufensprung (7) keilförmig erweitern, so daß die Kontur der Kanalwände (6') einen gestuften Verlauf aufweist, derart, daß zum ersten Keilwinkel α 1 ein zweiter Keilwinkel α 2 addiert wird und so fort.

4. Keramisches Filterelement nach einem der Ansprüche 1 bis 3 dadurch gekennzeichnet, daß der zwischen zwei Kanälen (4) angeordnete Steg (3) von der Mittelachse aus gesehen zunächst gerade, mit gleichbleibender Breite bis maximal zur Hälfte der angrenzenden Kanalwände (6') verläuft und anschließend sich nach außen hin keilförmig erweitert, so daß die Kontur der Kanalwände (6') einen gestuften Verlauf aufweist, wobei der erste Keilwinkel α 1 = 0 Grad ist.

5. Keramisches Filterelement nach einem der Ansprüche 1 bis 4, dadurch gekennzeichnet, daß sich die Stege (3) des Stutzkörpers (2) nach außen hin kontinuierlich erweitern, so daß die Kontur der Kanalwände (6') einen Kurvenverlauf mit kontinuierlich zunehmendem Steigungswinkel α aufweist.

6. Keramisches Filterelement nach einem der Ansprüche 1 bis 5 dadurch gekenzeichnet, daß die Kanäle (4) an den Stellen wo zwei Kanalwände zusammenlaufen, Radien (10; 11) oder andere kontinuierlich verlaufende übergangsformen aufweisen.

7. Keramisches Filterelement nach einem der Ansprüche 1 bis 6, dadurch gekennzeichnet, daß der Stützkörper (2) zu den koaxial angeordneten Kanälen (4; 4') einen weiteren zylindrischen Kanal (9) aufweist, der sich durch die Mittelachse des Stützkörpers erstreckt.

8. Keramisches Filterelement nach Anspruch 1, dadurch gekennzeichnet, daß der langgestreckte Stützkörper (2) einen quadratischen Querschnitt aufweist und von einer Vielzahl quadratischer Känale (4), ähnlich einer Wabenstruktur durchzogen ist, wobei die Kanalquerschnittflächen von innen nach außen abnehmen und die verbleibenden Stege (3') sich nach außen hin, in treppenartigen Stufensprüngen einem keilförmigen Fließpfad (20) folgend, erweitern.

9. Keramisches Filterelement nach Anspruch 1, dadurch gekennzeichnet, daß der langgestreckte Stützkörper (2) einen hexagonalen Querschnitt aufweist und von einer Vielzahl sechseckiger Kanäle, ähnlich einer Wabenstruktur durchzogen ist, wobei die Kanalquerschnittflächen von innen nach außen abnehmen und die verbleibenden Stege sich nach außen hin, in treppenartigen Stufensprüngen einer keilförmigen Kontur folgend, erweitern.

## Claims

1. Ceramic filter element for the crossflow filtration of liquids and gases having an elongate support body (2) of porous ceramic material that has especially a mean pore diameter of from 3 »m to 20 »m, and at least two coaxial channels (4, 4') extending through the support body, to the surface of which channels there is applied a single- or multi-layer ceramic membrane (12) having a calibrated pore structure, in which filter element the filtrate, selected by means of the membrane, of a fluid flowing through the channels emerges through the support body at the outer surface thereof and can be collected there by an appropriate device, which filter element is characterised in that channels (4; 4') are arranged coaxially around the notional middle axis of the support body (2), the contour of the outwardly facing channel wall (5; 5'), viewed in cross-section, being adapted to the outer contour (8; 17) of the support body (2) so that the support body (2) has there a constant wall thickness, the thickness of which is appropriate to the mechanical stresses and the contour of the other channel walls (6; 6'; 6'') is constructed in such a manner that the webs (3; 3') remaining between the channels (4; 4') broaden outwards in a wedge, the breadth of the webs increasing to a maximum of three times the thinnest wall thickness.

2. Ceramic filter element according to claim 1, characterised in that the elongate support body (2) is polygonal in cross-section or in the shape of a cylinder and has segment-shaped channels (4; 4') on one or more reference circles (15; 16), at least 3 channels (4; 4') being arranged on one reference circle.

3. Ceramic filter element according to either claim 1 or claim 2, characterised in that when there is a single coaxially arranged series of channels the webs (3) of the support body (2) broaden outwards in a wedge by at least one stage transition (7) so that the contour of the channel walls (6') has a sectional form such that a second wedge angle α 2 is added to the first wedge angle α 1 and so on.

4. Ceramic filter element according to any one of claims 1 to 3, characterised in that, viewed from the middle axis, the web (3) arranged between two channels (4) initially runs in a straight line, its breadth remaining constant for up to a maximum of half of the adjacent channel walls (6') and then broadens outwards in a wedge so that the contour of the channel walls (6') has a sectional form, the first wedge angle α 1 being equal to 0 degrees.

5. Ceramic filter element according to any one of claims 1 to 4, characterised in that the webs (3) of the support body (2) broaden outwards continuously so that the contour of the channel walls (6') has a curved shape having a continuously increasing angle of divergence α.

6. Ceramic filter element according to any one of claims 1 to 5, characterised in that at the points where two channel walls converge the channels (4) have arcs (10; 11) or other continuous transition shapes.

7. Ceramic filter element according to any one of claims 1 to 6, characterised in that the support body (2) has in addition to the coaxially arranged channels (4; 4') a further cylindrical channel (9) that extends through the middle axis of the support body.

8. Ceramic filter element according to claim 1, characterised in that the elongate support body (2) is square in cross-section and a plurality of square-shaped channels (4) pass through it, similarly to a honeycomb structure, the cross-sectional areas of the channels decreasing from the inside outwards and the remaining webs (3') broadening outwards in step-like stage transitions following a wedge-shaped flow path (20).

9. Ceramic filter element according to claim 1, characterised in that the elongate support body (2) is hexagonal in cross-section and a plurality of hexagonal channels pass through it, similarly to a honeycomb structure, the cross-sectional areas of the channels decreasing from the inside outwards and the remaining webs broadening outwards in step-like stage transitions, following a wedge-shaped contour.

## Revendications

1. Elément de filtre céramique pour la filtration à courant ou flux tangentiel de liquides et de gaz, avec un corps de support (2) allongé en matière céramique poreuse présentant en particulier un diamètre moyen des pores de 3 »m à 20 »m, avec au moins deux canaux (4,4') coaxiaux qui s'étendent à travers le corps de support et sur la surface desquels est appliquée une membrane céramique (12) monocouche ou multicouche à structure poreuse calibrée, le filtrat, sélectionné à l'aide de la membrane à partir d'un fluide traversant les canaux quittant le corps de support sur la surface latérale de ce dernier pour être ici récupéré à l'aide d'un dispositif approprié, caractérisé par le fait que des canaux (4; 4') sont disposés coaxialement autour de l'axe central imaginaire du corps de support (2), les canaux présentant, vus en coupe transversale, une paroi (5, 5') tournée vers l'extérieur dont le contour est adapté au contour extérieur (8; 17) du corps de support (2) de sorte que le corps de support (2) présente ici une épaisseur de paroi uniforme, correspondant à la charge mécanique, et les autres parois (6; 6'; 6'') des canaux présentant un contour tel que les cloisons (3; 3') subsistant entre entre les canaux (4,4') augmentent d'épaisseur vers l'extérieur en forme de coin, l'épaisseur des cloisons allant en augmentant jusqu'à un maximum de trois fois l'épaisseur de paroi la plus faible.

2. Elément de filtre céramique suivant la revendication 1, caractérisé par le fait que le corps de support allongé (2) présente une section polygonale ou la forme d'un cylindre et qu'il comporte sur un ou plusieurs cercles de division (15; 16) des canaux (4; 4') en forme de segments, au moins trois canaux (4, 4') étant disposés sur un cercle de division.

3. Elément de filtre céramique suivant l'une des revendications 1 et 2, caractérisé par le fait que les cloisons (3) du corps de support (2), dans le cas d'une unique rangée de canaux disposée coaxialement, augmentant d'épaisseur en forme de coin vers l'extérieur avec au moins un gradin (7) de manière que le contour des parois (6') des canaux présente une allure échelonnée de telle manière qu'à un premier angle de coin α₁ s'ajoute un deuxième angle de coin α₂ et ainsi de suite.

4. Elément de filtre céramique suivant l'une des revendications 1 à 3, caractérisé par le fait que la cloison (3) disposée entre deux canaux (4), vue depuis l'axe central, est d'abord rectiligne, avec une largeur constante au maximum jusqu'à la moitié des parois contiguës (6') des canaux et augmente ensuite d'épaisseur vers l'extérieur en forme de coin, de sorte que le contour des parois (6') des canaux présente une allure échelonnée, le premier de coin α₁ étant égal à 0°.

5. Elément de filtre céramique suivant l'une des revendications 1 à 4, caractérisé par le fait que les cloisons (3) du corps de support (2) augmentent d'épaisseur de façon continue vers l'extérieur de sorte que le contour des parois (6') des canaux présente une allure curviligne avec un angle d'inclinaison α augmentant de façon continue.

6. Elément de filtre céramique suivant l'une des revendications 1 à 5, caractérisé par le fait que les canaux (4') présentent, aux endroits où deux parois de canaux se raccordent, des rayons (10; 11) ou d'autres formes de raccordement continues.

7. Elément de filtre céramique suivant l'une des revendications 1 à 6, caractérisé par le fait que le corps de support (2) présente, en plus des canaux (4; 4') disposés coaxialement, un canal cylindrique (9) qui s'étend suivant l'axe central du corps de support.

8. Elément de filtre céramique suivant la revendication 1, caractérisé par le fait que le corps de support (2) allongé présente une section transversale carrée et est traversé par une multitude de canaux (4) carrés, à la manière d'une structure en nids d'abeilles , les sections transversales des canaux diminuant de l'intérieur vers l'extérieur et les cloisons (3') subsistant entre les canaux augmentant d'épaisseur vers l'extérieur, suivant des gradins en escalier, en suivant un trajet d'écoulement (20) en coin.

9. Elément de filtre céramique suivant la revendication 1, caractérisé par le fait que le corps de support (2) allongé présente une section transversale hexagonale et est traversé par une multitude de canaux hexagonaux, à la manière d'une structure en nids d'abeilles, les sections transversales des canaux diminuant de l'intérieur vers l'extérieur et les cloisons subsistant entre les canaux augmentant d'épaisseur vers l'extérieur, suivant des gradins en escaliers, en suivant un contour en coin.
